(19) Europäisches Patentamt / European Patent Office / Office européen des brevets

(11) **EP 2 304 393 B1**

(12) **EUROPÄISCHE PATENTSCHRIFT**

(45) Veröffentlichungstag und Bekanntmachung des Hinweises auf die Patenterteilung:
**16.11.2022   Patentblatt 2022/46**

(21) Anmeldenummer: **09781088.1**

(22) Anmeldetag: **27.07.2009**

(51) Internationale Patentklassifikation (IPC):
**G01F 1/84** (2006.01)

(52) Gemeinsame Patentklassifikation (CPC):
**G01F 1/8495; G01F 1/8413**

(86) Internationale Anmeldenummer:
**PCT/EP2009/059623**

(87) Internationale Veröffentlichungsnummer:
**WO 2010/012670 (04.02.2010 Gazette 2010/05)**

(54) **MEßWANDLER VOM VIBRATIONSTYP**

VIBRATION-TYPE TRANSDUCER

TRANSDUCTEUR DE MESURE DU TYPE À VIBRATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008   DE 102008035877**

(43) Veröffentlichungstag der Anmeldung:
**06.04.2011   Patentblatt 2011/14**

(73) Patentinhaber: **Endress+Hauser Flowtec AG
4153 Reinach (CH)**

(72) Erfinder:
• **ANKLIN-IMHOF, Martin
CH-4143 Dornach (CH)**
• **BITTO, Ennio
CH-4147 Aesch (CH)**
• **SCHÜTZE, Christian
CH-4055 Basel (CH)**
• **KUMAR, Vivek
CH-4132 Muttenz (CH)**

(74) Vertreter: **Hahn, Christian et al
Endress+Hauser Group Services
(Deutschland)AG +Co. KG
Colmarer Straße 6
79576 Weil am Rhein (DE)**

(56) Entgegenhaltungen:
| | |
|---|---|
| EP-A- 0 759 542 | DE-A1- 10 312 796 |
| DE-A1-102004 030 392 | US-A- 4 756 198 |
| US-A- 4 895 031 | US-A- 5 349 872 |

EP 2 304 393 B1

**Beschreibung**

Die Erfindung betrifft einen Meßwandler vom Vibrationstyp mit wenigstens einem im Betrieb zumindest zeitweise vibrierendes Meßrohr zum Führen von zu messendem Medium, insb. einem Gas und/oder einer Flüssigkeit; wenigstens einem Schwingungssensor zum Erzeugen wenigstens eines Vibrationen des Meßrohrs repräsentierenden Primärsignals des Meßwandlers, sowie wenigstens einem das Meßrohr im wesentlichen entlang einer von dessen gedachten Umfangslinien fest umspannendes Befestigungselement zum Haltern einer Komponente des Schwingungssensors, etwa einer Magnetspule oder einem Dauermagneten, am Meßrohr.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals Meßsysteme verwendet, die mittels eines Meßwandlers vom Vibrationstyp und einer daran angeschlossenen, zumeist in einem separaten Elektronik-Gehäuse untergebrachten, Treiber- und Auswerteelektronik, im strömenden Medium Reaktionskräfte, beispielsweise Corioliskräfte, induzieren und von diesen abgeleitet ein die wenigstens eine Meßgröße, beispielsweise einem Massedurchfluß, einer Dichte, einer Viskosität oder einem anderen Prozeßparameter, entsprechend repräsentierendes Meßsignal erzeugen.

Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelne Komponenten davon, sind z.B. in der EP-A 317 340, der US-A 47 38 144, der US-A 47 77 833, der US-A 48 23 614, der US-A 52 87 754, der US-A 52 91 792, der US-A 53 01 557, der US-A 53 98 554, der US-A 54 76 013, der US-A 55 31 126, der US-A 56 02 345, der US-A 56 10 342, der US-A 57 31 527, der US-A 56 91 485, US-A 57 96 010, der US-A 57 96 012, US-A 57 96 011, der US-A 59 45 609, der US-A 59 79 246, der US-A 60 47 457, der US-A 60 92 429, der US-B 61 68 069, der US-B 62 23 605, der US-6311136, der US-B 63 30 832, der US-B 63 97 685, der US-B 65 57 422, der US-B 65 19 828, der US-B 66 66 098, US-B 63 78 364, der US-B 66 91 583, der US-B 68 40 109, der US-B 68 60 158, der US-B 68 83 387, der US-B 66 51 513, der US-B 67 58 102, der US-B 69 20 798, US-B 70 80 564, der US-B 70 73 396, der US-B 70 77 014, US-B 70 40 179, der US-B 70 17 424, der US-B 72 13 469, der US-B 72 99 699, der US-A 73 37 676, der US-B 73 40 964, der US-B 73 60 451, der US-B 73 92 709, der US-A 2006/0201260, der US-A 2007/0186685, der US-A 2007/0151371, der US-A 2007/0151370, der US-A 2007/0119265, der US-A 2007/0119264, der US-A 2008/0141789, der US-A 2008/0047361, der JP-A 8-136311, der JP-A 9-015015, der WO-A 08/059015, der WO-A 08/013545, der WO-A 01 02 816, der WO-A 00 14 485 oder der WO-A 99 40 394 beschrieben. Jeder der darin gezeigten Meßwandler umfaßt wenigstens ein im wesentlichen gerades oder wenigstens ein gekrümmtes Meßrohr zum Führen des, gegebenenfalls auch extrem kalten oder extrem heißen, Mediums.

Im Betrieb des Meßsystems wird das wenigstens ein Meßrohr zwecks Generierung von durch das hindurchströmende Medium mit beeinflußten Schwingungsformen im Betrieb vibrieren gelassen.

Zum Erregen von Schwingungen des wenigstens einen Meßrohrs weisen Meßwandler vom Vibrationstyp des weiteren eine im Betrieb von einem von der erwähnten Treiberelektronik generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf das Meßrohr praktisch direkt einwirkenden elektromechanischen, insb. elektro-dynamischen, Schwingungserregers zu Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen des wenigstens einen Meßrohrs, insb. denen im Coriolismode, und zum Erzeugen von vom zu erfassenden Prozeßparameter, wie etwa dem Massedurchfluß oder der Dichte, beeinflußten elektrischen Sensorsignalen.

Als angeregte Schwingungsform - dem sogenannten Nutzmode - wird bei Meßwandlern mit gekrümmtem, z.B. U-, V- oder $\Omega$-artig geformtem, Meßrohr üblicherweise jene Eigenschwingungsform gewählt, bei denen das Meßrohr zumindest anteilig bei einer niedrigsten natürlichen Resonanzfrequenz um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem das Meßrohr zumindest anteilig Biegeschwingungen im wesentlichen in einer einzigen gedachten Schwingungsebene ausführt, so daß die Schwingungen im Coriolismode dementsprechend als zu den Nutzmodeschwingungen koplanere Biegeschwingungen gleicher Schwingfrequenz ausgebildet sind.

Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, insb. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Erregung der Schwingungen erforderlichen Erregerleistung.

Bei Meßwandlern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die Prozeßleitung eingebunden. Bei Meßwandlern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßwandlers ist zumeist allein mittels der zwei Verbindungsrohrstücke, über die das Meßrohr im Betrieb mit der Prozeßleitung kommuniziert, in einem schutzgebenden Meßwandler-Gehäuse gehalten, insb. in einer Schwingungen des Innenteil relativ zum Meßrohr ermöglichenden Weise.

Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet. Bei marktgängigen Meßwandlern der vorgenannten Art ist zumeist auch der Gegenschwinger im wesentlichen rohrförmig und als im wesentlichen gerader Hohlzylinder ausgebildet, der im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Die Erregeranordnung von Meßwandlern der in Rede stehenden Art weist üblicherweise wenigstens einen elektrodynamischen und/oder differentiell auf das wenigstens eine Meßrohr und den ggf. vorhandenen Gegenschwinger oder das ggf. vorhandene andere Meßrohr einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen - bei Meßwandlern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßwandlern gezeigt, zumeist zumindest punktuell entlang einer gedachten mittigen Umfangslinie des Meßrohrs außen an diesem fixiert. Alternativ zu einer mittels eher zentral und direkt auf das Meßrohr wirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden.

Bei den meisten markgängigen Meßwandlern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Magnetspule zusammenwirkenden stabförmigen Dauermagneten gebildet, der das Magnetfeld liefert. Jede der vorgenannten Spulen ist zudem mittels wenigstens eines Paars elektrischer Anschlußleitungen mit der erwähnten Betriebs- und Auswerteelektronik des In-Line-Meßgeräts verbunden, die zumeist auf möglichst kurzem Wege von den Spulen über den Gegenschwinger hin zum Wandlergehäuse geführt sind.

Bei Meßwandlern der in Rede stehenden Art ist es, wie u.a. auch in der US-A 60 47 457 oder der US-B 69 20 798 erwähnt, zudem üblich Magnetspule und den damit korrespondierenden Dauermagneten der Schwingungserreger oder der Schwingungssensoren an auf das Meßrohr aufgebrachte ring- oder ringscheibenförmige, insb. metallische, Befestigungselemente zu haltern, die das Meßrohr jeweils im wesentlichen entlang einer von dessen gedachten Umfangslinien fest umspannen. Das jeweilige Befestigungselement kann, wie u.a. in der US-A 60 47 457, US-B 72 99 699, der US-A 2006/0201260, der US-A 56 10 342 bzw. der US-B 65 19 828 vorgeschlagen, durch Verpressen von außen, durch hydraulisches Pressen oder Walzen von innerhalb des Meßrohrs oder durch thermisches Aufschrumpfen am Meßrohr fixiert werden, insbesondere in der Weise, daß es dauerhaft elastischen oder gemischt plastisch-elastischen Verformungen unterworfen und infolgedessen bezüglich des Meßrohrs permanent radial vorgespannt ist.

Wie u.a. in den eingangs erwähnten der US-A 2008/0141789, US-B 73 18 356, US-B 69 20 798, US-B 68 68 740, US-B 67 58 102, US-A 57 34 112, US-A 57 31 527 557, US-A 55 76 500 oder US-A 53 01 diskutiert, können Meßwandler vom Vibrationstyp und insoweit das gesamte damit gebildete Meßsystem neben den eingangs erwähnten Empfindlichkeit auf die primären Meßgrößen Massendurchfluß oder Dichte und ggf. auch die Viskosität auch eine gewisse Querempfindlichkeit auf Druck aufweisen, dies im besonderen auch für den Fall, daß das Medium als zwei- oder mehrphasig ausgebildet ist, etwa als Flüssigkeits-Gas-Gemisch. Diese Druckempfindlichkeit kann gelegentlich zu einer, wenn auch geringfügigen, wegen der angestrebten hohen Meßgenauigkeit dennoch nicht ohne weiteres vernachlässigbarer Verfälschung des primären Meßwerts, wie etwa dem Massendurchfluß, führen bzw. läßt den Meßfehler entsprechend kompensierende Maßnahmen erforderlich werden.

Eine Möglichkeit, der unerwünschten Querempfindlichkeit solcher Meßwandler auf Druck entgegenzuwirken kann, wie z.B. in der US-B 69 20 798 vorgeschlagen, darin bestehen, Metallringe oder ähnliche Metallkörper zu verwenden, die das Meßrohr in für die Druckempfindlichkeit besonders kritischen Bereichen, wie etwa allfällig vorhandene Übergänge zwischen geraden und gekrümmten Rohrsegmenten, koaxial umspannen. Wie in der US-B 69 20 798 ferner ausgeführt, kann ein solcher Metallkörper gleichzeitig auch als Befestigungselement der vorgenannten Art dienen.

Weiterführende Untersuchungen an solchen Meßsystemen haben jedoch ergeben, daß neben den bereits als für die Druckempfindlichkeit besonders kritisch identifizierten Bereichen von Meßwandlern der in Rede stehenden Art, noch andere Druckabhängigkeiten provozierende Störquellen innerhalb solcher Meßwandler zu besorgen sind, die weitere Maßnahmen in solchen Meßwandlern zur Reduzierung unerwünschter Querempfindlichkeit auf Druck erforderlich werden lassen. Im besonderen ist hierbei festgestellt worden, daß schnelle Änderungen des Drucks im strömenden Medium, wie etwa durch Ventile verursachte Druckstöße und/oder durch Pumpen verursachte pulsierende Druckschwankungen, erhebliche Einflüsse auf die geforderte extrem hohe Meßgenauigkeit von Meßsystemen der in Rede stehenden Art haben können. Als besonders kritisch sind im weiteren mit Druckstößen im Meßrohr einhergehende Hubbewegungen der Schwingungssensoren identifiziert worden, die bezüglich des Meßrohrs in radiale Richtung, insb. auch trotz Verwendung ring- oder ringscheibenförmige Metallkörpern gemäß der US-A 60 47 457 als Befestigungselemente, mit für die Meßgenauigkeit nicht vernachlässigbaren Amplituden auftreten können.

Eine Aufgabe der Erfindung besteht daher darin, mittels Meßwandler vom Vibrationstyp gebildet Meßsysteme dahingehend zu verbessern, daß diese keine oder nur eine geringfügige Querempfindlichkeit auf Druck aufzeigen, insb. auch keine oder nur noch geringfügige Hubbewegungen bei den Schwingungssensoren gestatten.

Zur Lösung der Aufgabe besteht die Erfindung in einem Meßwandler vom Vibrationstyp, gemäß dem unabhängigen Anspruch 1

Der erfindungsgemäße Meßwandler zeichnet sich dadurch aus, daß er eine im Vergleich zu dem aus dem Stand der Technik bekannten Meßwandler geringere Querempfindlichkeit auf Druck bzw. eine geringere Abhängigkeit der Meßgenauigkeit vom im Meßrohr herrschenden Innendruck aufweist; dies im besonderen auch im Vergleich zu koneventionellen Meßwandlern mit Befestigungselementen gemäß der US-A 60 47 457. Es hat sich hierbei nämlich überraschenderweise gezeigt, daß bei Verwendung eines Befestigungselements mit rechteckiger Außenkontur und daraus herausragendem Fortsatz eine für die angestrebte hohe Meßgenauigkeit bessere Verteilung der mit Druckschwankungen einhergehenden Radialkräfte erreicht werden kann, als mit herkömmlichen Befestigungselementen der in Rede stehenden Art, insb. auch gemäß US-A 60 47 457. Dies äußert sich insbesondere darin, daß die Radialkräfte und deren räumliche Verteilung im Befestigungselement derart beeinflußt werden können, daß sie im Bereich des Fortsatzes ein Minimum aufweisen. Die im Bereich des Fortsatzes verbleibenden restlichen Radialkräfte bzw. die damit einhergehenden Verformungen desselben fallen zudem weitaus geringer aus, als die bei konventionellen Meßwandlern der in Rede stehenden Art mit ansonsten im wesentlichen vergleichbarer Dimensionierung von Meßrohr und herkömmlichem Befestigungselement.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.

Fig. 1    zeigt ein In-Line-Meßgerät für in Rohrleitungen strömende Medien in einer perspektivischen Seitenansicht;

Fig. 2    zeigt in einer geschnitten Seitenansicht einen für ein In-Line-Meßgerät gemäß der Fig. 1 geeigneten Meßwandler vom Vibrations-Typ;

Fig. 3    zeigt einen Ausschnitt des Meßwandlers gemäß den Fig. 2 in einer geschnittenen Seitenansicht; und

Fig. 4a, b    zeigen in verschiedenen, teilweise geschnitten Seitenansichten Ausschnitte einer weiteren Variante eines für ein In-Line-Meßgerät gemäß der Fig. 1 geeigneten Meßwandlers vom Vibrations-Typ.

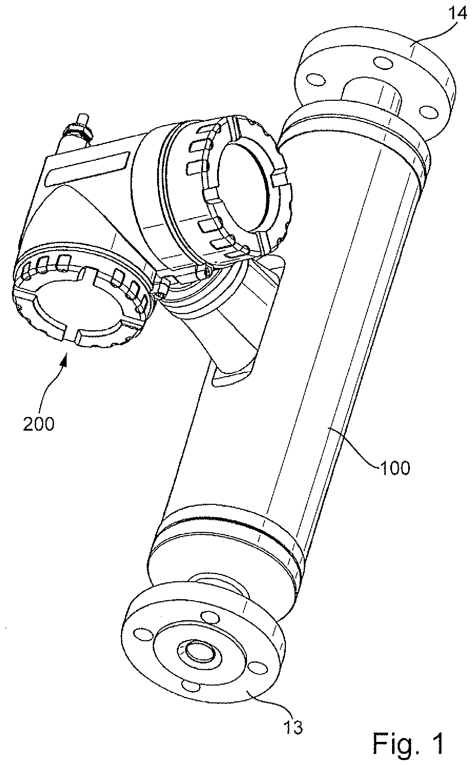

In der Fig. 1 ist ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät, Druckmeßgerät oder dergleichen, Meßsystem dargestellt, das dem Messen und/oder Überwachen wenigstens einer physikalischen Meßgröße, beispielsweise einem Massendurchfluß, einer Dichte, einer Viskosität etc., von einem in der Prozeßleitung strömenden Medium dient. Das - hier als In-Line-Meßgerät in Kompaktbauweise ausgebildete - Meßsystem umfaßt dafür einen über ein Einlaßende sowie ein Auslaßende an die Prozeßleitung angeschlossenen Meßwandler vom Vibrationstyp der im Betrieb entsprechend vom zu messenden Medium durchströmt und an eine dem Ansteuern des Meßwandlers dienende Treiber-Elektronik des Meßsystems sowie eine Primärsignale des Meßwandlers verarbeitende, gegebenenfalls im Betrieb auch mit der Treiber-Elektronik kommunizierende, Auswerte-Elektronik des Meßsystems elektrisch angeschlossen ist, die im Betrieb die wenigstens eine Meßgröße repräsentierende Meßwerte liefert. Die Treiber-Elektronik und die Auswerte-Elektronik sowie weitere, dem Betrieb des Meßsystems dienende Elektronikkomponenten, wie etwa interne Energieversorgungsschaltungen und/oder dem Anschluß an ein übergeordnetes Meßdatenverarbeitungssystem und/oder einem Feldbus dienenden Kommunikationsschaltungen, sind ferner in einem entsprechenden, insb. schlag- und/oder auch explosionsfest ausgebildeten, Elektronikgehäuse 200 untergebracht.

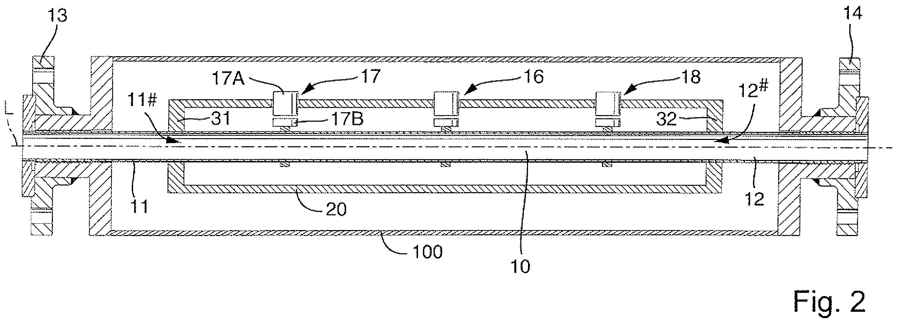

In Fig. 2 ist stark vereinfacht ein Ausführungsbeispiel für einen solchen Meßwandler vom Vibrationstyp schematisch dargestellt. Der Meßwandler dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß m, eine Dichte $\rho$ und/oder eine Viskosität $\eta$ des Mediums gemessen werden.

Der Meßwandler umfaßt dafür ein Wandler-Gehäuse 100 sowie ein im Wandler-Gehäuse 100 angeordnetes, die physikalisch-elektrische Konvertierung des wenigstens einen zu messenden Parameters eigentlich bewirkendes Innenteil.

Zum Führen des Mediums umfaßt das Innenteil wenigstens ein - im in den Fig. 2 gezeigten Ausführungsbeispiel einziges im wesentlichen gerades - Meßrohr 10, das im Betrieb vibrieren gelassen und dabei, um eine statische Ruhelage oszillierend, wiederholt elastisch verformt wird. An dieser Stelle sei vorsorglich und ausdrücklich darauf hingewiesen, daß - obwohl der Meßwandler im in Fig. 2 gezeigten Ausführungsbeispiel ein einziges gerades Meßrohr aufweist und zumindest insoweit in seinem mechanischen Aufbau wie auch seinem Wirkprinzip etwa dem in den eingangs erwähnten EP-A 317 340, US-B 72 99 699, US-B 70 73 396, US-B 70 40 179, US-B 70 17 424, US-B 68 40 109, US-B 66 91 583, US-B 66 51 513, US- B 63 97 685, US-B 63 30 832, US-A 60 47 457, US-A 59 79 246, US-A 59 45 609, US-A 57 96 012, US-A 57 96 010, US-A 56 91 485, US-A 55 31 126, US-A 54 76 013, US-A 53 98 554, US-A 52 91 792, US-A 48 23 614,- zur Realisierung der Erfindung selbstverständlich auch andere Meßwandler vom Vibrationstyp, insb. auch mit mehr als einem Meßrohr und/oder mit gebogenen Meßrohren, dienen können. Beispielsweise kann das wenigstens eine Meßrohr und insoweit auch eine innerhalb von dessen Lumen verlaufende gedachte Schwerelinie des Meßrohrs dabei zumindest abschnittsweise im wesentlichen S-, $\Omega$-, oder U-förmig oder, wie z.B. in der US-B 68 60 158, US-B 66 66 098, US-B 72 13 469 bzw. der US-B 73 60 451gezeigt, zumindest abschnittsweise im wesentlichen V-förmig ausgebildet sein. Beispiele anderer für die Realisierung der Erfindung geeignete Meßrohrformen sind darüberhinaus u.a. in den eingangs erwähnten US-A 52 87 754, US-A 56 02 345, US-A 57 96 011, US- 6311136, US-B 67 58 102, US-A 57 31 527, US-A 53 01 557, oder der US-B 69 20 798 beschrieben.

Im Betrieb des Meßwandlers wird das Meßrohr 10, wie bei derartigen Meßwandlern üblich, zu Biegeschwingungen im sogenannten Nutzmode - beispielsweise bei einer im wesentlichen einer natürlichen Resonanzfrequenz entsprechenden Erregerfrequenz $f_{exc}$ - so angeregt, daß es sich, um eine gedachte - hier zu einer gedachten Längsachse L des Meßwandlers, die dessen Einlaß- und Auslaßende imaginär verbindet, im wesentlichen parallele oder auch koinzidente - Biegeschwingungsachse oszillierend, zumindest anteilig im wesentlichen gemäß einer natürlichen ersten Eigenschwingungsform ausbiegt. Für den betriebsmäßig vorgesehenen Fall, daß das Medium in der Prozeßleitung strömt und somit der Massedurchfluß m von Null verschieden ist, werden mittels des in vorbeschriebener Weise vibrierenden Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben im wesentlichen gemäß einer natürlichen zweiten Eigenschwingungsform. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als zweite Eigenschwingungsform kann, wie bei deratigen Meßwandlern mit geradem Meßrohr üblich, z.B. die Eigenschwingungsform eines zum Nutzmode im wesentlichen komplanaren anti-symmetrischen Biegeschwingungsmodes sein.

Zur Minimierung von auf das Meßrohr 10 wirkenden Störeinflüssen wie auch zur Reduzierung von seitens des Meßwandlers an die angeschlossene Prozeßleitung abgegebener Schwingungsenergie ist im Meßwandler des weiteren ein Gegenschwinger 20 vorgesehen. Dieser ist, wie auch in Fig. 2 gezeigt, vom Meßrohr 10 seitlich beabstandet im Meßwandler angeordnet und unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der - im gezeigten Ausführungsbeispiel im wesentlichen parallel zum Meßrohr 10 verlaufende, ggf. auch koaxial zu diesem angeordnete - Gegenschwinger 20 kann beispielsweise rohrförmig oder auch im wesentlichen kastenförmig, auch ausgeführt sein. Im hier gezeigten Ausführungsbeispiel ist der Gegenschwinger 20 mittels wenigstens eines einlaßseitigen ersten Kopplers 31 am Einlaßende 11# des Meßrohrs 10 und mittels wenigstens eines auslaßseitigen, insb. zum Koppler 31 im wesentlichen identischen, zweiten Kopplers 32 am Auslaßende 12# des Meßrohrs 10 gehalten. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind, etwa durch Aufpressen und/oder Auflöten entsprechender Metallkörper gemäß der eingangs erwähnten US-A 60 47 457 oder US-B 61 68 069.

Wie in der Fig. 2 schematisch dargestellt, ist das Meßrohr 10 ferner über ein einlaßseitig im Bereich der ersten Kopplungszone 11# einmündendes gerades erstes Verbindungsrohrstück 11 und über ein auslaßseitig im Bereich der zweiten Kopplungszone 12# einmündendes, insb. zum ersten Verbindungsrohrstück 11 im wesentlichen identisches, gerades zweites Verbindungsrohrstück 12 entsprechend an die das Medium zu- bzw. abführende - hier nicht dargestellte - Prozeßleitung angeschlossen, wobei ein Einlaßende des einlaßseitigen Verbindungsrohrstück 11 praktisch das Einlaßende des Meßwandlers und ein Auslaßende des auslaßseitigen Verbindungsrohrstück 12 das Auslaßende des Meßwandlers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Zur Herstellung des Meßrohrs 10 kann im übrigen praktisch jedes der für solche Meßwandler üblichen Materialien, wie z.B. Stahl, Hastelloy, Titan, Zirkonium, Tantal etc., verwendet werden.

Wie aus der Zusammenschau der Fig. 1 und 2 weiterhin ersichtlich, ist das, insb. im Vergleich zum Meßrohr 10 biege- und torsionssteifes, Wandlergehäuse 100, insb. starr, an einem bezüglich der ersten Kopplungszone #11 distalen Einlaßende des einlaßseitigen Verbindungsrohrstücks 11 sowie an einem bezüglich der ersten Kopplungszone #11 distalen Auslaßende des auslaßseitigen Verbindungsrohrstück 12 fixiert. Insoweit ist also das gesamte Innenteil nicht nur vom Wandlergehäuse 100 vollständig umhüllt, sondern infolge seiner Eigenmasse und der Federwirkung beider Verbindungsrohrstücke 11, 12 im Wandler-Gehäuse 100 auch schwingfähig gehalten. Zusätzlich zur Aufnahme des Innenteils kann das Wandlergehäuse 100 zudem auch dazu dienen, das Elektronikgehäuse 200 des In-line-Meßgeräts mit darin untergebrachter Treiber- und Auswerte-Elektronik zu haltern. Für den Fall, daß der Meßwandler lösbaren mit der, beispielsweise als metallische Rohrleitung ausgebildeten, Prozeßleitung zu montieren ist, ist ferner dem einlaßseitigen Verbindungsrohrstück 11 an seinem Einlaßende ein erster Anschlußflansch 13 des Meßwandlers und dem auslaßseitigen Verbindungsrohrstück 12 an einem Auslaßende ein zweiter Anschlußflansch 14 des Meßwandlers angeformt. Die Anschlußflansche 13, 14 können dabei, wie bei Meßwandlern der beschriebenen Art durchaus üblich auch zumindest teilweise endseitig in das Wandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden.

Zum Anregen mechanischer Schwingungen des Meßrohrs 10, insb. den Biegeschwingungen im Nutzmode, sowie des ggf. vorhandenen Gegenschwingers 20 umfaßt der Meßwandler ferner eine, insb. elektrodynamische, Erregeranordnung 16. Diese dient dazu - angesteuert von einem von der Treiber-Elektronik gelieferten und, gegebenenfalls im Zusammenspiel mit der Aus-werte-Elektronik, entsprechend konditionierten Erreger-signal, z.B. mit einem geregelten Strom und/oder einer geregelten Spannung -, mittels der Treiber-Elektronik eingespeiste elektrische Erregerenergie $E_{exc}$ in eine auf das Meßrohr 10, z.B. pulsförmig oder harmonisch, einwirkende und dieses in der vorbeschriebenen Weise auslenkende Erregerkraft $F_{exc}$ umzuwandeln. Für das Einstellen der Erregerenergie $E_{exc}$ geeignete Treiber-Elektroniken sind dem Fachmann hinlänglich bekannt und z.B. in der US-A 47 77 833, der US-A 48 01 897, der 48 79 911 oder der US-A 50 09 109 gezeigt. Die Erregerkraft $F_{exc}$ kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 16 kann z.B. ein elektrodynamischer Schwingungserreger dienen, der mittels einer am Gegenschwinger 20 befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am Meßrohr 10 fixiert ist, gebildet ist. Andere - durchaus auch für das erfindungsgemäße Meßsystem geeignete - Erregeranordnungen für Schwingungen des wenigstens einen Meßrohrs sind z.B. in den eingangs erwähnten US-B 65 57 422, US-A 60 92 429, US-A 48 23 614, US-B 62 23 605 oder US-A 55 31 126 gezeigt.

Gemäß einer weiteren Ausgestaltung der Erfindung ist das wenigstens eine Meßrohr im Betrieb mittels der Erregeranordnung 16 zumindest zeitweise in einem Nutzmode angeregt, in dem es zumindest anteilig - insb. überwiegend oder ausschließlich - Biegeschwingungen um die Einlaß- und Auslaßende des Meßrohrs imaginär miteinander verbindende gedachte Schwingungsachse ausführt, beispielsweise mit einer einzigen und/oder einer niedrigsten seiner Resonanzfrequenzen. Die Biegeschwingungen des Meßrohrs weisen dabei im Bereich der das einlaßseitige Ende des Meßrohrs definierenden einlaßseitigen Kopplungszone 11 # einen einlaßseitigen Schwingungsknoten und im Bereich der das auslaßseitige Ende des Meßrohrs definierenden auslaßseitigen Kopplungszone 11# einen auslaßseitigen Schwingungsknoten auf. Bei dem in Fig. 2 gezeigten Ausführungsbeispiel führt das Meßrohr 10 die Biegeschwingungen relativ zu Gegenschwinger 20 und Längsachse L aus. Im Falle einer differentiell auf Meßrohr und Gegenschwinger wirkenden Erregeranordnung wird zwangsweise auch der Gegenschwinger 20 zu simultanen - hier bezüglich der Biegeschwingungen des Meßrohrs im wesentlichen komplanaren Biegeschwingungen angeregt, und zwar so, daß er zumindest anteilig außerphasig, insb. im wesentlichen gegenphasig, zum im Nutzmode schwingenden Meßrohr 10 oszilliert. Im besonderen sind Meßrohr 10 und Gegenschwinger 20 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind. Nach einer weiteren Ausgestaltung der Erfindung, ist die Erreger- oder auch Nutzmodefrequenz, $f_{exc}$, dabei so eingestellt, daß sie möglichst genau einer, beispielsweise kleinsten, natürlichen Eigenfrequenz von Biegeschwingungen des Meßrohrs 10 entspricht.

Bei dem in der Fig. 2 gezeigten Ausführungsbeispiel ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L bzw. zur gedachten Schwingungsachse der Biegeschwingungen des Meßrohrs verlaufen daß die Rohrsegmente sowohl zur Längsachse L als auch zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet.

Zum Erfassen von Schwingungen des Meßrohrs 10 weist der Meßwandler ferner wenigstens einen - hier einlaßseitig des Meßrohrs angeordneten -Schwingungssensor 17 zum Erzeugen wenigstens eines Vibrationen des Meßrohrs 10 repräsentierenden Primärsignals des Meßwandlers auf. Wie bei Meßsystemen der in Rede stehenden Art üblich, kann der Meßwandler ferner wenigstens einen - beispielsweise auslaßseitig am Meßrohrs plazierten und/oder zum Schwingungssensor 17 im wesentlichen baugleichen - zusätzlichen zweiten Schwingungssensor 18 aufweisen, der wenigstens ein weiteres, beispielsweise auslaßseitige, Vibrationen des wenigstens einen Meßrohrs 10 repräsentierendes Primärsignal des Meßwandlers liefert.

Im hier gezeigten Ausführungsbeispiel sind der erste Schwingungssensor 17 einlaßseitig und der zweite Schwingungssensor 18 auslaßseitig am wenigstens einen Meßrohr angeordnet, so daß der Meßwandler beispielsweise auch in einem als Coriolis-Massendurchfluß-Meßgerät ausgebildeten Meßsystem verwendet werden kann. Desweiteren ist der erste Schwingungssensor 17, wie bei derartigen Meßwandlern vom Vibrationstyp durchaus üblich, auf einer vom Schwingungserreger eingenommenen Seite des Meßrohrs im Meßwandler angeordnet. Ferner ist auch der zweite Schwingungssensor 18 auf einer vom ersten Schwingungssensor 51 eingenommenen Seite des Meßrohrs im Meßwandler angeordnet, insb. vom wenigstens einen Schwingungserreger gleichweit beabstandet wie der erste Schwingungssensor 17. Als Schwingungssensoren 17, 18 können z.B. die Schwingungen relativ, insb. differentiell, zum Gegenschwinger messende elektrodynamische Geschwindigkeitssensoren verwendet werden. Falls erforderlich, können ferner in der dem Fachmann bekannten Weise noch weitere für die Messung und/oder den Betrieb des Meßwandlers benötigte Sensoren, wie z.B. am Gegenschwinger 20 und/oder am Wandlergehäuse 100 angeordnete zusätzliche Beschleunigungssensoren, vgl. hierzu auch die US-A 57 36 653, oder z.B. auch am Meßrohr 10, am Gegenschwinger 20 und/oder am Wandlergehäuse 100 angeordnete Temperatursensoren und/oder Dehnungsmeßstreifen vorgesehen sein, vgl. hierzu auch die US-A 47 68 384, die US-B 70 40 179 oder die WO-A 00/102816.

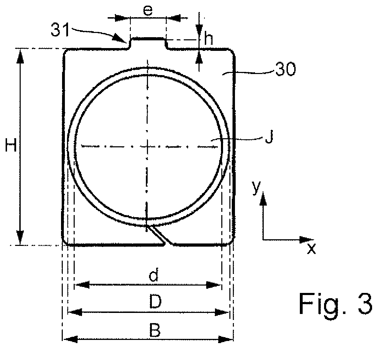

Dem Haltern wenigstens einer Komponente des ersten Schwingungssensors 17 - beispielsweise einer Magnetspule 17A oder einem Dauermagneten 17B - am wenigstens einen Meßrohr 10 dient ein dieses im wesentlichen entlang einer von dessen gedachten Umfangslinien fest, insb. vollumfänglich, umspannendes, insb. metallisches und/oder im wesentlichen scheibenförmiges, erstes Befestigungselement 30, von dem in Fig. 3 ein Ausführungsbeispiel schematisiert dargestellt ist. Als Material für das Befestigungselement 30 kann z.B. eine zum Rohrmaterial kompatible Metallegierung, etwa aus Titan oder ein Stahl, oder eine entsprechende Keramik dienen. Das Befestigungselement 30 weist beim erfindungsgemäßen Meßsystem eine im wesentlichen rechteckförmige Außenkontur mit einem daraus um eine Höhe h herausragenden, dem Haltern der wenigstens einen Komponente des Schwingungssensors dienenden Fortsatz 31 mit einer Breite e auf, die mindestens gleich der der Höhe h des Fortsatzes 31 ist und/oder die kleiner als eine Gesamtbreite B des Befestigungselements ist. Die Gesamtbreite B des Befestigungselements 30 wiederum ist größer als ein größter Außendurchmesser D des Meßrohrs. Der Fortsatz 31 ist im gezeigten Ausführungsbeispiel im wesentlichen mittig an der die Gesamtbreite B des Befestigungselements 30 definierenden Seite angeordnet; falls erforderlich kann er aber auch etwas außerhalb der Mitte an vorgenannter Seite plaziert sein. Nach einer weiteren Ausgestaltung der Erfindung ist der Fortsatz ferner so ausgebildet, daß dessen Breite e weniger als 60% der Gesamtbreite B des Befestigungselements beträgt. Im hier gezeigten Ausführungsbeispiel ist das Befestigungselement 30 desweiteren so ausgebildet, daß eine eine Höhe H des Befestigungselements definierenden Seite, die zu einer die Gesamtbreite B des Befestigungselements definierenden Seite im wesentlichen senkrecht ist, größer ist als die Gesamtbreite B des Befestigungselements

Im besonderen ist das, beispielsweise auch einstückig und/oder mittels eines Stanzteils gebildete, Befestigungselement 30 so dimensioniert, daß vorübergehende elastische Verformungen desselben, insb. solchen, die zumindest teilweise bezüglich des Meßrohrs und/oder der Längsachse L radial ausgerichtete Deformationen der Außenkontur des Befestigungselements 30 bewirken, im Bereich des Fortsatzes 31 ein Minimum aufweisen. Solche Deformationen der Außenkontur können beispielsweise Folge radialer und/oder druckabhängiger temporärer Verformungen des Meßrohrs sein, hervorgerufen etwa durch Druckstöße oder extreme Druckschwankungen im zu messenden Medium.

Gemäß einer weiteren Ausgestaltung der Erfindung ist das Befestigungselement 30 dafür ferner so im Meßwandler plaziert und ausgerichtet, daß eine gedachte Schwereachse, auf die ein größtes axiale Flächenträgheitsmoment J bezogen ist, im wesentlichen parallel zur gedachten Schwingungsachse des Meßrohrs ist bzw. im wesentlichen parallel zu einer von den Biegeschwingungen des Meßrohrs imaginär aufgespannten, gedachten Schwingungsebene (LX) verläuft. Bei dem in Fig. 3 gezeigten Ausführungsbeispiel ist das Befestigungselement 30 ferner so ausgerichtet, daß die vorgenannten gedachte Schwereachse im wesentlichen senkrecht zu mit den Biegeschwingungen des Meßrohrs einhergehenden - hier also im wesentlichen in X-Richtung ausgeführten - Bewegungen des Befestigungselements verläuft. Das größte axiales Flächenträgheitsmoment J des Befestigungselements wird im wesentlichen durch einen Außen-Durchmesser D, die Höhe H, die Gesamtbreite B sowie die Breite e und Höhe h des Fortsatzes 31 bestimmt und entspricht im vorliegenden Ausführungsbeispiel im wesentlichen der Beziehung

$$J = \frac{BH^3}{12} - \frac{\pi}{64}D^4 + \frac{eh^3}{12} + \left(\frac{H+h}{2}\right)^2 \cdot eh.$$

Für den erwähnten Fall, daß das Befestigungselement 30 im wesentlichen scheibenförmig ausgebildet ist, also in Richtung der Längsachse des Meßwandlers gesehen eine im Vergleich zur Gesamtbreite B und zur Höhe H wesentlich geringere Länge aufweist, ist das das erste Befestigungselement 30 im Ergebnis somit auch im Meßwandler so plaziert und ausgerichtet, daß eine einem größten Massenträgheitsmoment des Befestigungselements 30 entsprechende Trägheitshauptachse im wesentlichen parallel zur gedachten Schwingungsachse ausgerichtet ist, insb. mit dieser koinzidiert, bzw. im wesentlichen parallel zu einer von den Biegeschwingungen des Meßrohrs aufgespannten gedachten Schwingungsebene verläuft. Bei dem in Fig. 3 gezeigten Ausführungsbeispiel verläuft die vorgenannte, dem größten Massenträgheitsmoment des Befestigungselements 30 entsprechende Trägheitshauptachse daher im wesentlichen senkrecht zu mit den Biegeschwingungen des Meßrohrs einhergehenden - - hier im wesentlichen in X-Richtung ausgeführten - Bewegungen des Befestigungselements 30.

Desweiteren ist, zumindest für den Fall, daß das Befestigungselement 30 im wesentlichen scheibenförmig ausgebildet ist, eine einem kleinsten Massenträgheitsmoment des Befestigungselements entsprechende Trägheitshauptachse im wesentlichen senkrecht zur gedachten Schwingungsachse ist bzw. im wesentlichen senkrecht zu einer von den Biegeschwingungen des Meßrohrs aufgespannten gedachten Schwingungsebene verläuft. Bei dem in Fig. 3 gezeigten Ausführungsbeispiel verläuft somit auch die vorgenannte, dem kleinsten Massenträgheitsmoment des Befestigungselements entsprechende Trägheitshauptachse im wesentlichen senkrecht zu mit den Biegeschwingungen des Meßrohrs einhergehenden Bewegungen des Befestigungselements. Bezüglich dieser der dem kleinsten Massenträgheitsmoment zugehörigen Trägheitshauptachse, insb. auch bezüglich einer gedachten Schnittebene des Befestigungselements die von der dem größten Massenträgheitsmoment zugehörigen Trägheitshauptachse und der dem kleinsten Massenträgheitsmoment zugehörigen Trägheitshauptachse imaginär aufgespannt ist, ist das Befestigungselement in vorteilhafter Weise ferner im wesentlichen spiegelsymmetrisch ausgebildet.

Das Befestigungselement ist gemäß einer weiteren Ausgestaltung der Erfindung ferner so im Meßwandler plaziert und so ausgerichtet, daß zumindest die seinem kleinsten Massenträgheitsmoment entsprechende Trägheitshauptachse in einem möglichst geringen Abstand zu einem Mittelpunkt, etwa einem Flächenschwerpunkt, eines vom Befestigungselement umfaßten gedachten Rohrquerschnitts des wenigstens einen Meßrohrs verläuft. Der zwischen dieser Trägheitshauptachse und dem Mittelpunkt Rohrquerschnitts bestehende Abstand ist dabei in vorteilhafter Weise so gewählt, daß er - falls möglich - gleich Null ist, so daß also zumindest die dem kleinsten Massenträgheitsmoment des Befestigungselements 30 entsprechende Trägheitshauptachse mit einem innerhalb des Rohrquerschnitts verlaufenden Durchmesser des Meßrohrs koinzidiert, höchsten aber 50% der Breite e des Fortsatzes 31 beträgt. Bei dem in Fig. 3 gezeigten Ausführungsbeispiel ist zudem auch die dem größten Massenträgheitsmoment entsprechende Trägheitshauptachse des Befestigungselements bzw. die seinem größten axialen Flächenträgheitsmoment J entsprechende Schwereachse in einem geringen Abstand zum vorgenannten Mittelpunkt des gedachten Rohrquerschnitts des wenigstens einen Meßrohrs geführt, ggf. auch so, daß sie mit einem im Rohrquerschnitt verlaufenden Durchmesser des Meßrohrs koinzidiert.

Untersuchungen haben ferner ergeben, daß durch gezielte Dimensionierung des Befestigungselements 30 insgesamt, insb. auch des Fortsatzes 31, relativ zum Meßrohr 10 die Druckempfindlichkeit des Meßwandlers noch weiter verringert werden kann.

Nach einer weiteren Ausgestaltung der Erfindung ist das Befestigungselement 30 daher so bemessen, daß die Breite e des Fortsatzes 31 mindestens gleich der Wandstärke s des Meßrohrs 10, insb. größer als die Wandstärke s des Meßrohrs 10, ist. Alternativ oder in Ergänzung dazu ist auch die Höhe h des Fortsatzes mindestens gleich der Wandstärke s des Meßrohrs 10 oder aber größer als die Wandstärke s gewählt. Als vorteilhaft hat sich ferner gezeigt, wenn die Breite e des Fortsatzes 31 mindesten einer doppelten Wandstärke s des Meßrohrs 10, insb. mehr als einem Dreifachen der Wandstärke s des Meßrohrs 10, entspricht und/oder wenn die Gesamtbreite B des Befestigungselements größer gewählt ist als ein 6-faches der Wandstärke s des Meßrohrs.

Das Befestigungselement 30 kann mittels der dem Fachmann geläufigen und u.a. auch in den eingangs erwähnten US-B 61 68 069, US-A 60 47 457, US-B 72 99 699, der US-A 2006/0201260, der US-A 56 10 342 bzw. der US-B 65 19 828 beschriebenen Verfahren, beispielsweise unter Bildung einer zumindest punktuellen, insb. abschnittsweise oder vollumfänglichen, kraft- und/oder formschlüssigen und oder zumindest punktuell, insb. abschnittsweise oder vollumfänglich, stoffschlüssig Verbindung, am Meßrohr fixiert werden. Das Fixieren des Befestigungselements am Meßrohr kann z.B. durch zumindest punktuelles, ggf. auch abschnittweises oder vollumfängliches Hartverlöten, durch zumindest punktuelles, ggf. auch abschnittsweises oder vollumfängliches Verschweißen oder Verkleben, durch thermisches Aufschrumpfen, mittels Verpressens von außen, mittels hydraulischen Pressens von innerhalb des Meßrohrs und/oder mittels Walzen von innerhalb des Meßrohrs realisiert werden.

Im besonderen ist das Befestigungselement 30 ferner so auf dem Meßrohr fixiert, beispielsweise gemäß einem der vorgenannten Verfahren, daß das Befestigungselement im Vergleich zu einem anfänglichen Zustand dauerhaft, insb. elastischen oder gemischt plastisch-elastischen, Verformungen unterworfen ist und/oder daß das Befestigungselement 30 permanent, insb. bezüglich des Meßrohrs radial, vorgespannt ist.

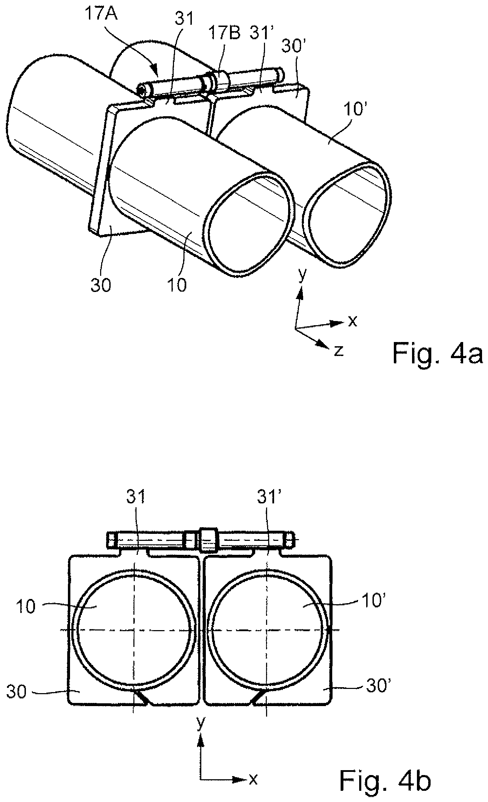

In der Fig. 4a ist ein Ausschnitt eines weiteren Meßwandlers schematisch in einer perspektivischen Seitenansicht dargestellt, während Fig. 4b denselben Meßwandler in einer teilweise geschnitten 2D-Seitenansicht zeigt. Der in den Fig. 4a, b dargestellte Meßwandler unterscheidet sich von dem gemäß dem Ausführungsbeispiel nach Fig. 2 im wesentlichen dahingehend, daß zusätzlich zum Meßrohr 10 nunmehr ein weiteres - hier im wesentlichen dazu paralleles und/oder im wesentlichen identisches - Rohr 10' im Meßwandler vorgesehen ist, an dem wiederum wenigstens ein, insb. zum ersten Befestigungselement 30 im wesentlichen baugleiches oder identisches, zweites Befestigungselement 30' mit einer wiederum im wesentlichen rechteckförmigen Außenkontur und einem daraus herausragenden Fortsatz 31' zum Haltern einer Komponente des - hier Vibrationen des Meßrohrs und des zusätzlichen Rohrs differentiell erfassenden, elektrodynamischen - Schwingungssensors fixiert ist, insb. einer Komponente des Schwingungssensors, die zu der mittels des ersten Befestigungselements 30 gehalterten komplementär ist.

Das zusätzliche Rohr 10' kann, wie bei derartigen Meßwandlern durchaus üblich, mittels wenigstens eines - hier nicht dargestellten - einlaßseitigen Koppelelements und wenigstens eines - hier gleichfalls nicht dargestellten auslaßseitigen Koppelelements an das Meßrohr mechanisch gekoppelt sein. Die, insb. im wesentlichen baugleichen, Koppelelemente können hierbei z.B. einfache plattenförmige Stanzteile oder speziell zugeschnittene, ggf. auch komplexere, Anbauteile sein, etwa gemäß der WO-A 08/059015, US-A 2008/0047361, US-B 73 40 964. Als für die Koppelelemente geeignetes Material kommt beispielsweise wiederum ein zum Rohrmaterial kompatibles Metall in Frage. Desweiteren kann das zusätzliche Rohr des in Fig, 4a gezeigten Meßwandlers, wie u.a. in den eingangs erwähnten US-A 56 02 345, US-A 57 96 011, US- 6311136, US-B 67 58 102, US-A 57 31 527, US-A 53 01 557, oder der US-B 69 20 798 gezeigt, als ein gleichfalls dem Führen von zu messendem Medium dienendes weiteres Meßrohr oder, wie beispielsweise in der erwähnten US-B 66 66 098 vorgeschlagen, als ein als Gegenschwinger dienendes Blindrohr ausgebildet sein. Die zwei, insb. einander baugleichen oder identischen, Meßrohre können wiederum in der für Meßwandler der in Rede stehenden Art üblichen Weise geformt sein, beispielsweise also zumindest abschnittsweise gekrümmt, etwa nach Art eines "Ω", "U" oder "V", oder aber auch im wesentlichen gerade. Für den vorgenannten Fall, daß das zusätzliche Rohr 10' als ein weiteres Meßrohr dient, sind die dann wenigstens zwei Meßrohre 10, 10' des Meßwandlers in bekannter Weise mittels eines einlaßseitigen Verteilerstücks und eines auslaßseitigen Verteilerstücks unter Bildung miteinander kommunizierender Strömungspfade mit einander mechanisch gekoppelt.

Im in Fig. 4a gezeigten Ausführungsbeispiel sind die beiden Befestigungselemente 30, 30' ferner einander gegenüberliegend im Meßwandler angeordnet, insb. so, daß die die gedachte Schwereachse des ersten Befestigungselements 30, auf die dessen größtes axiales Flächenträgheitsmoment J bezogen ist, zu einer entsprechenden gedachten Schwereachse des zweiten Befestigungselements 30', auf die ein größtes von dessen axialen Flächenträgheitsmomenten bezogen ist, und/oder die gedachte Trägheitshauptachse des ersten Befestigungselements, auf die dessen größtes Massenträgheitsmoment bezogen ist, zu einer entsprechenden gedachten Trägheitshauptachse des zweiten Befestigungselements, auf die ein größtes von dessen Massenträgheitsmoment bezogen ist, im wesentlichen parallel ausgerichtet sind. Desweiteren sind die beiden Befestigungselemente 30, 30' so im Meßwandler plaziert und so zueinander ausgerichtet, daß die erwähnte gedachte Trägheitshauptachse des ersten Befestigungselements 30, auf die dessen kleinstes Massenträgheitsmoment bezogen ist, zu einer entsprechenden gedachten Trägheitshauptachse des zweiten Befestigungselements 30', auf die ein kleinstes von dessen Massenträgheitsmoment bezogen ist, im wesentlichen parallel ausgerichtet ist, insb. auch so daß, - wie aus der Zusammenschau von Fig. 4a und 4b ohne weiteres ersichtlich - jede der Trägheitshauptachse des ersten Befestigungselements 30 zu einer jeweils korrespondierenden Trägheitshauptachse des zweiten Befestigungselements 30' parallel ausgerichtet ist und/oder die beiden Befestigungselemente 30, 30' im wesentlichen in einer gemeinsamen gedachten Schnittebene des Meßwandler liegen und insoweit miteinander fluchten.

Gemäß einer weiteren Ausgestaltung der Erfindung ist ferner vorgesehen, daß am Fortsatz 31 des ersten Befestigungselements 30 eine, insb. als Zylinderspule ausgebildet, Magnetspule 17A des Schwingungssensors und am Fortsatz 31' des zweiten Befestigungselements 30' ein mit der Magnetspule entsprechend korrespondierender, insb. zumindest teilweise in diese eintauchender und/oder von einem Magnetbecher gefaßten, Dauermagnet 17B des Schwingungssensors gehalten sind. Ferner ist im in Fig. 4a und b gezeigten Ausführungsbeispiel die Magnetspule des Schwingungssensors am Fortsatz des ersten Befestigungselements so fixiert, daß eine gedachte Längsachse der Magnetspule zu einer gedachten Längsachse des Dauermagneten im wesentlichen fluchtend ausgerichtet ist.

Für den bereits mehrfach erwähnten Fall, daß der Meßwandler zusätzlich zum ersten Schwingungssensor wenigstens einen von diesem beabstandet am Meßrohr angeordneten zweiten Schwingungssensor 18 umfaßt, kann dieser in der gleichen Weise wie der erste Schwingungssensor 17 mittels eines erfindungsgemäßen Befestigungselements am wenigstens einen Meßrohr 10 fixiert sein.

**Patentansprüche**

1.  Meßwandler vom Vibrationstyp, umfassend:

    - wenigstens ein im Betrieb zumindest zeitweise vibrierendes, insb. zumindest abschnittsweise gekrümmtes, Meßrohr (10) mit einer Wandstärke (s);

- wenigstens einen, insb. elektrodynamischen, Schwingungssensor (17) zum Erzeugen wenigstens eines Vibrationen des Meßrohrs (10) repräsentierenden Primärsignals des Meßwandlers; sowie

- wenigstens ein das Meßrohr im wesentlichen entlang einer von dessen gedachten Umfangslinien fest umspannendes, insb. metallisches, erstes Befestigungselement (30) mit einer Gesamtbreite (B) zum Haltern einer Komponente des Schwingungssensors, insb. eine Magnetspule oder einen Dauermagneten, am Meßrohr, wobei das erste Befestigungselement eine im wesentlichen rechteckförmige Außenkontur mit einem daraus um eine Höhe (h) herausragenden, dem Haltern der Komponente des Schwingungssensors dienenden Fortsatz (31) mit einer Breite (e) aufweist, die kleiner als die Gesamtbreite (B) des Befestigungselements ist, wobei die Komponente des Schwingungssensors (17) am Fortsatz fixiert ist.

2. Meßwandler nach einem der vorherigen Ansprüche,

- wobei die Höhe (h) des der Fortsatzes mindestens gleich der Wandstärke (s) des Meßrohrs (10), insb. größer als die Wandstärke (s) des Meßrohrs (10), ist; und/oder

- wobei die Breite (e) des Fortsatzes mindestens gleich der Wandstärke (s) des Meßrohrs (10), insb. größer als die Wandstärke (s) des Meßrohrs (10), ist; und/oder

- wobei die Breite (e) des Fortsatzes mindesten einer doppelten Wandstärke (s) des Meßrohrs (10), insb. mehr als einem Dreifachen der Wandstärke (s) des Meßrohrs (10), entspricht; und/oder

- wobei die Breite (e) des Fortsatzes weniger als 60% der Gesamtbreite (B) des Befestigungselements beträgt; und/oder

- wobei die Breite (e) des Fortsatzes größer ist als dessen Höhe (h); und/oder

- wobei der Fortsatz, insb. mittig, an einer die Gesamtbreite (B) des Befestigungselements definierenden Seite angeordnet ist; und/oder

- wobei eine eine Höhe (H) des Befestigungselements definierenden Seite, die zu einer die Gesamtbreite (B) des Befestigungselements definierenden Seite im wesentlichen senkrecht ist, größer ist als die Gesamtbreite (B) des Befestigungselements; und/oder

- wobei die Gesamtbreite (B) des Befestigungselements größer ist als ein 6-faches der Wandstärke (s) des Meßrohrs; und/oder

- wobei die Gesamtbreite (B) des Befestigungselements größer ist als ein größter Außendurchmesser (D) des Meßrohrs.

3. Meßwandler nach einem der vorherigen Ansprüche,

- wobei das Befestigungselement, insb. infolge thermischen Aufschrumpfens und/oder Verpressens von außen und/oder hydraulischen Pressens von innerhalb des Meßrohrs und/oder Walzen von innerhalb des Meßrohrs, dauerhaft, insb. elastischen oder gemischt plastisch-elastischen, Verformungen unterworfen ist; und/oder

- wobei das Befestigungselement permanent, insb. bezüglich des Meßrohrs radial, vorgespannt ist; und/oder

- wobei das Befestigungselement mit dem Meßrohr zumindest punktuell, insb. abschnittsweise oder vollumfänglich, kraft- und/oder formschlüssig verbunden ist; und/oder

- wobei das Befestigungselement mit dem Meßrohr zumindest punktuell, insb. abschnittsweise oder vollumfänglich, stoffschlüssig verbunden ist; und/oder

- wobei das Befestigungselement mit dem Meßrohr zumindest punktuell, insb. abschnittsweise oder vollumfänglich, verlötet, insb. hart verlötet, ist; und/oder

- wobei das Befestigungselement mit dem Meßrohr zumindest punktuell, insb. abschnittsweise oder vollumfänglich, verschweißt ist; und/oder

- wobei das Befestigungselement mit dem Meßrohr zumindest punktuell, insb. abschnittsweise oder vollumfänglich, verklebt ist; und/oder

- wobei das Befestigungselement so dimensioniert ist, daß vorübergehende, insb. zumindest teilweise bezüglich des Meßrohrs radial ausgerichtete Deformationen von dessen Außenkontur bewirkende, elastische Verformungen desselben, insb. infolge radialer und/oder druckabhängiger temporärer Verformungen des Meßrohrs, im Bereich des Fortsatzes ein Minimum aufweisen.

4. Meßwandler nach einem der vorherigen Ansprüche, wobei die Komponente des Schwingungssensors ein Dauermagnet ist.

5. Meßwandler nach einem der Ansprüche 1 bis 3, wobei die Komponente des Schwingungssensors eine Magnetspule ist.

6. Meßwandler nach dem vorherigen Anspruch, wobei der Meßwandler ferner ein, insb. zum ersten Befestigungselement im wesentlichen baugleiches oder identisches, zweites Befestigungselement mit einer im wesentlichen rechteckförmigen Außenkontur und einem daraus herausragenden Fortsatz umfaßt, wobei ein Dauermagnet des Schwingungssensors am Fortsatz des zweiten Befestigungselements fixiert ist.

7. Meßwandler nach dem vorherigen Anspruch, wobei die Magnetspule des Schwingungssensors am Fortsatz des ersten Befestigungselements und die der Dauermagnet des Schwingungssensors am Fortsatz des zweit Befestigungselements so fixiert sind, daß eine gedachte Längsachse der Magnetspule zu einer gedachten Längsachse des Dauermagneten im wesentlichen fluchtend ausgerichtet ist.

8. Meßwandler nach einem der vorherigen Ansprüche, wobei das wenigstens eine Meßrohr im Betrieb, insb. mittels einer elektrodynamischen Erregeranordnung, zumindest zeitweise in einem Nutzmode angeregt ist, in dem es, insb. überwiegend oder ausschließlich, Biegeschwingungen um eine gedachte, insb. zu einer Enden des wenigstens einen Meßrohrs imaginär verbindenden Längsachse des Meßwandlers parallelen, Schwingungsachse, insb. mit einer einzigen und/oder mit einer von dessen Resonanzfrequenzen, ausführt.

9. Meßwandler nach dem vorherigen Anspruch, wobei das erste Befestigungselement so im Meßwandler plaziert und ausgerichtet ist,

   - daß eine einem kleinsten Massenträgheitsmoment des ersten Befestigungselements entsprechende Trägheitshauptachse

      -- im wesentlichen senkrecht zur gedachten Schwingungsachse ist, und/oder
      -- im wesentlichen senkrecht zu einer von den Biegeschwingungen des Meßrohrs aufgespannten gedachten Schwingungsebene verläuft, und/oder
      -- im wesentlichen senkrecht zu mit den Biegeschwingungen des Meßrohrs einhergehenden Bewegungen des Befestigungselements verläuft, und/oder
      -- in einem höchsten 50% der Breite (e) des Fortsatzes (31) betragenden Abstand zu einem Mittelpunkt, insb. einem Flächenschwerpunkt, eines vom Befestigungselement umfaßten gedachten Rohrquerschnitts des wenigstens einen Meßrohrs verläuft, und/oder
      -- mit einem innerhalb eines vom Befestigungselement umfaßten gedachten Rohrquerschnitts des wenigstens einen Meßrohrs verlaufenden Durchmesser des Meßrohrs koinzidiert; und/oder

   - daß eine einem größten Massenträgheitsmoment des ersten Befestigungselements entsprechende Trägheitshauptachse

      -- im wesentlichen parallel zur gedachten Schwingungsachse ist, und/oder
      -- im wesentlichen parallel zu einer von den Biegeschwingungen des Meßrohrs aufgespannten gedachten Schwingungsebene verläuft, und/oder
      -- im wesentlichen senkrecht zu mit den Biegeschwingungen des Meßrohrs einhergehenden Bewegungen des Befestigungselements verläuft; und/oder
      -- in einem höchsten 50% der Breite (e) des Fortsatzes (31) betragenden Abstand zu einem Mittelpunkt, insb. einem Flächenschwerpunkt, eines vom Befestigungselement umfaßten gedachten Rohrquerschnitts des wenigstens einen Meßrohrs verläuft.

10. Meßwandler nach einem der vorherigen Ansprüche,

   - wobei das Befestigungselement bezüglich einer einem kleinsten Massenträgheitsmoment des ersten Befestigungselements entsprechenden Trägheitshauptachse, insb. auch bezüglich einer gedachten Schnittebene des Befestigungselements die von einer einem größten Massenträgheitsmoment des Befestigungselements zugehörigen Trägheitshauptachse und der dem kleinsten Massenträgheitsmoment des Befestigungselements zugehörigen Trägheitshauptachse imaginär aufgespannt ist, im wesentlichen spiegelsymmetrisch ausgebildet ist; und/oder
   - wobei das erste Befestigungselement ein durch einen Außen-Durchmesser (D) des Meßrohrs, die Höhe (H), die Gesamtbreite B sowie Breite (e) und Höhe (h) des Fortsatzes bestimmtes, insb. größtes und/oder in einer gedachten Querschnittsebene des wenigstens einen Meßrohrs liegendes, axiales Flächenträgheitsmoment (J) bezüglich einer seiner gedachten Schwereachsen aufweist, daß im wesentlichen der Beziehung

$$ J = \frac{BH^3}{12} - \frac{\pi}{64}D^4 + \frac{eh^3}{12} + \left(\frac{H+h}{2}\right)^2 \cdot eh $$

entspricht.

11. Meßwandler nach einem der vorherigen Ansprüche, wobei das erste Befestigungselement ein, insb. durch einen Außen-Durchmesser (D) des Meßrohrs, die Höhe (H), die Gesamtbreite (B) sowie Breite e und Höhe (h) des Fortsatzes bestimmtes und/oder in einer gedachten Querschnittsebene des wenigstens einen Meßrohrs liegendes, größtes axiales Flächenträgheitsmoment (J) bezüglich einer seiner gedachten Schwereachsen aufweist.

12. Meßwandler nach dem vorherigen Anspruch, wobei das erste Befestigungselement so im Meßwandler plaziert und ausgerichtet ist, daß die gedachte Schwereachse, auf die das größte axiale Flächenträgheitsmoment (J) bezogen ist,

    - im wesentlichen parallel zur gedachten Schwingungsachse ist, und/oder
    - im wesentlichen parallel zu einer von den Biegeschwingungen des Meßrohrs aufgespannten gedachten Schwingungsebene verläuft, und/oder
    - im wesentlichen senkrecht zu mit den Biegeschwingungen des Meßrohrs einhergehenden Bewegungen des Befestigungselements verläuft; und/oder
    - in einem höchsten 50% der Breite (e) des Fortsatzes (31) betragenden Abstand zu einem Mittelpunkt, insb. einem Flächenschwerpunkt, eines vom Befestigungselement umfaßten gedachten Rohrquerschnitts des wenigstens einen Meßrohrs verläuft; und/oder
    - mit einem innerhalb eines vom Befestigungselement umfaßten gedachten Rohrquerschnitts des wenigstens einen Meßrohrs verlaufenden Durchmesser des Meßrohrs koinzidiert.

13. Meßwandler nach einem der vorherigen Ansprüche, wobei der Meßwandler wenigstens zwei, insb. mittels eines einlaßseitigen Verteilerstücks und eines auslaßseitigen Verteilerstücks und/oder mittels wenigstens eines einlaßseitigen Koppelelements und wenigstens eines auslaßseitigen Koppelelements, miteinander mechanisch gekoppelte und/oder einander baugleiche und/oder gekrümmte und/oder zueinander parallele, im Betrieb zumindest zeitweise, insb. gegengleich, vibrierende Meßrohre umfaßt.

14. Meßwandler nach dem vorherigen Anspruch, wobei der wenigstens eine, insb. elektrodynamische, Schwingungssensor Vibrationen der wenigstens zwei, insb. identischen und/oder U- oder V-förmigen, Meßrohre differentiell erfaßt.

15. Verwenden eines Meßwandlers gemäß einem der vorherigen Ansprüche zum Messen eines Massendurchflusses und/oder einer Dichte und/oder einer Viskosität und/oder eines Drucks eines in einer Prozeßleitung strömenden Mediums.

**Claims**

1. Vibronic-type transducer, comprising:

    - at least a measuring tube (10) with a wall thickness (s), said measuring tube vibrating at least intermittently during operation, said tube being particularly curved at least in sections;
    - at least a vibration sensor (17), particularly electrodynamic, designed to generate at least a primary signal of the transducer representing vibrations of the measuring tube (10); and
    - at least a first securing element (30), particularly metal, having a total width (B) and firmly enclosing the measuring tube essentially along one of its imaginary circumferential lines, said securing element being designed to hold a component of the vibration sensor, particularly a magnetic coil or a permanent magnet, on the measuring tube, wherein the first securing element has an essentially rectangular exterior contour with an extension (31) projecting out by a height (h) and serving to hold the component of the vibration sensor and having a width (e) which is less than the total width (B) of the securing element, wherein the component of the vibration sensor (17) is fixed on the extension.

2. Transducer as claimed in the previous claim,

    - wherein the height (h) of the extension is at least equal to the wall thickness (s) of the measuring tube (10), particularly greater than the wall thickness (s) of the measuring tube (10); and/or
    - wherein the width (e) of the extension is at least equal to the wall thickness (s) of the measuring tube (10), particularly greater than the wall thickness (s) of the measuring tube (10); and/or
    - wherein the width (e) of the extension corresponds to at least twice the wall thickness (s) of the measuring tube (10), particularly more than three times the wall thickness (s) of the measuring tube (10); and/or
    - wherein the width (e) of the extension is less than 60 % of the total width (B) of the securing element; and/or
    - wherein the width (e) of the extension is greater than its height (h); and/or
    - wherein the extension is arranged, particularly centrally, on a side defining the total width (B) of the securing element; and/or
    - wherein a side defining a height (H) of the securing element, which is essentially perpendicular to a side defining the total width (B) of the securing element, is greater than the total width (B) of the securing element; and/or
    - wherein the total width (B) of the securing element is greater than 6 times the wall thickness (s) of the measuring tube; and/or
- wherein the total width (B) of the securing element is greater than a largest outer diameter (D) of the measuring tube.

3. Transducer as claimed in one of the previous claims,

- wherein the securing element is subject to permanent deformations, particularly elastic or mixed plastic-elastic, particularly following thermal shrinking and/or pressing from the outside and/or hydraulic pressing from within the measuring tube and/or rolling from within the measuring tube; and/or
- wherein the securing element is pretensioned permanently, particularly radially in relation to the measuring tube; and/or
- wherein the securing element is connected to the measuring tube at least at points, particularly in sections or over the entire circumference, by means of a frictional connection and/or by means of a positive-locking connection; and/or
- wherein the securing element is connected to the measuring tube at least at points, particularly in sections or over the entire circumference, by means of a substance-to-substance connection; and/or
- wherein the securing element is soldered to the measuring tube at least at points, particularly in sections or over the entire circumference, particularly hard-soldered; and/or
- wherein the securing element is welded to the measuring tube at least at points, particularly in sections or over the entire circumference; and/or
- wherein the securing element is stuck to the measuring tube at least at points, particularly in sections or over the entire circumference; and/or
- wherein the securing element is sized in such a way that temporary elastic deformations, particularly following temporary radial and/or pressure-dependent deformations of the measuring tube, which cause deformations of the exterior contour that are at least partially radial in relation to the measuring tube, have a minimum value in the area of the extension.

4. Transducer as claimed in one of the previous claims, wherein the component of the vibration sensor is a permanent magnet.

5. Transducer as claimed in one of the Claims 1 to 3, wherein the component of the vibration sensor is a magnetic coil.

6. Transducer as claimed in the previous claim, wherein the transducer further comprises a second securing element - essentially identical to or identical in design to the first securing element - with an exterior contour that is essentially rectangular and an extension projecting out of said contour, wherein a permanent magnet of the vibration sensor is fixed on the extension of the second securing element.

7. Transducer as claimed in the previous claim, wherein the magnetic coil of the vibration sensor is fixed on the extension of the first securing element and the permanent magnet of the vibration sensor is fixed on the extension of the second securing element, in such a way that an imaginary longitudinal axis of the magnetic coil is aligned essentially flush in relation to an imaginary longitudinal axis of the permanent magnet.

8. Transducer as claimed in one of the previous claims, wherein the at least one measuring tube is excited, during operation, particularly by means of electrodynamic exciter arrangement, at least temporarily in a useful mode, such that it performs flexural vibrations, particularly predominantly or exclusively, around an imaginary axis of vibration, particularly with a single resonance frequency and/or with one of the resonance frequencies, wherein said axis of vibration is parallel to a longitudinal axis of the transducer which connects in an imaginary manner the ends of the at least one measuring tube.

9. Transducer as claimed in the previous claim, wherein the first securing element is located and aligned in the transducer in such a way that

- a main axis of inertia corresponding to a minimum mass moment of inertia of the first securing element

-- is essentially perpendicular to the imaginary axis of vibration, and/or
-- is essentially perpendicular to an imaginary vibration plane defined by flexural vibrations of the measuring tube, and/or
-- is essentially perpendicular to movements of the securing element accompanying the flexural vibrations of the measuring tube, and/or
-- extends to a maximum distance of 50 % of the width (e) of the extension (31) to a central point, particularly a geometrical center of gravity, of an imaginary tube cross-section of the at least one measuring tube, said cross-section being enclosed by the securing element, and/or
-- coincides with a diameter of the measuring tube extending within an imaginary cross-section of the at least one measuring tube enclosed by the securing element; and/or

- a main axis of inertia corresponding to a maximum mass moment of inertia of the first securing element

-- is essentially parallel to the imaginary axis of vibration, and/or

-- is essentially parallel to an imaginary vibration plane defined by the flexural vibrations of the measuring tube, and/or

-- is essentially perpendicular to movements of the securing element accompanying the flexural vibrations of the measuring tube; and/or

-- extends to a distance, amounting at maximum to 50 % of the width (e) of the extension (31), to a point central, particularly a geometrical center of gravity, of an imaginary cross-section of the at least one measuring tube enclosed by the securing element.

10. Transducer as claimed in one of the previous claims,

- wherein the securing element is designed to be essentially mirror-symmetrical in relation to a main axis of inertia corresponding to a minimum mass moment of inertia of the first securing element, particularly also in relation to an imaginary section plane of the securing element which is defined in an imaginary manner by a main axis of inertia associated with a maximum mass moment of inertia of the securing element and the main axis of inertia associated with the minimum mass moment of inertia of the securing element; and/or

- wherein the first securing element has an axial geometrical moment of inertia (J) - which is determined by an outer diameter (D) of the measuring tube, the height (H), the total width (B) as well as the width (e) and the height (h) of the extension - particularly the largest and/or located on an imaginary section plane of the at least one measuring tube, in relation to one its imaginary axes of gravity, which corresponds essentially to the relationship

$$J = \frac{BH^3}{12} - \frac{\pi}{64}D^4 + \frac{eh^3}{12} + \left(\frac{H+h}{2}\right)^2 \cdot eh$$
.

11. Transducer as claimed in one of the previous claims, wherein the first securing element has a maximum axial geometrical moment of inertia (J) in relation to one of its imaginary axes of gravity, which is determined particularly by an outer diameter (D) of the measuring tube, the height (H), the total width (B) as well as the width (e) and the height (h) of the extension and/or is located in an imaginary section plane of the at least one measuring tube.

12. Transducer as claimed in the previous claim, wherein the first securing element is located and aligned in the transducer in such a way that the imaginary axis of gravity to which the maximum axial geometrical moment of inertia (J) refers,

- is essentially parallel to the imaginary axis of vibration, and/or

- is essentially parallel to an imaginary vibration plane defined by the flexural vibrations of the measuring tube, and/or

- is essentially perpendicular to movements of the securing element accompanying the flexural vibrations of the measuring tube; and/or

- extends to a distance, amounting at maximum to 50 % of the width (e) of the extension (31), to a central point, particularly a geometrical center of gravity, of an imaginary tube cross-section, enclosed by the securing element, of the at least one measuring tube; and/or

- coincides with a diameter of the measuring tube extending inside an imaginary tube cross-section, enclosed by the securing element, of the at least one measuring tube.

13. Transducer as claimed in one of the previous claims, wherein the transducer comprises at least two measuring tubes mechanically coupled to one another and/or identical in design and/or curved and/or parallel to one another, which vibrate at least intermittently during operation, particularly in opposite directions, wherein said tubes are coupled by means of a distributor on the inlet side and a distributor on the outlet side and/or by means of at least one coupling element on the inlet side and at least one coupling element on the outlet side.

14. Transducer as claimed in the previous claim, wherein the at least one vibration sensor, particularly electrodynamic, measures vibrations of the at least two measuring tubes, which are particularly identical and/or U-shaped or V-shaped, in a differential manner.

15. Use of a transducer as claimed in one of the previous claims, designed to measure a mass flow and/or a density and/or a viscosity and/or a pressure of a medium flowing through the process pipe.

**Revendications**

1. Transducteur du type à vibrations, comprenant :

- au moins un tube de mesure (10) avec une épaisseur de paroi (s), lequel tube de mesure vibre au moins par intermittence pendant le fonctionnement, lequel tube est notamment courbé au moins par sections ;

- au moins un capteur de vibrations (17), notamment électrodynamique, destiné à générer au moins un signal primaire du transducteur représentant des vibrations du tube de mesure (10) ; ainsi que

- au moins un premier élément de fixation (30), notamment métallique, présentant une largeur totale (B) et entourant fermement le tube de mesure pour l'essentiel le long d'une de ses lignes circonférentielles imaginaires, lequel élément de fixation est destiné à maintenir un composant du capteur de vibrations, notamment une bobine magnétique ou un aimant permanent, sur le tube de mesure, le premier élément de fixation présentant un contour extérieur pour l'essentiel rectangulaire avec un prolongement (31) dépassant de celui-ci d'une hauteur (h), servant à maintenir le composant du capteur de vibrations et présentant une largeur (e) qui est inférieure à la largeur totale (B) de l'élément de fixation, le composant du capteur de vibrations (17) étant fixé sur le prolongement.

2. Transducteur selon la revendication précédente,

- pour lequel la hauteur (h) du prolongement est au moins égale à l'épaisseur de paroi (s) du tube de mesure (10), notamment supérieure à l'épaisseur de paroi (s) du tube de mesure (10) ; et/ou

- pour lequel la largeur (e) du prolongement est au moins égale à l'épaisseur de paroi (s) du tube de mesure (10), notamment supérieure à l'épaisseur de paroi (s) du tube de mesure (10) ; et/ou

- pour lequel la largeur (e) du prolongement correspond à au moins deux fois l'épaisseur de paroi (s) du tube de mesure (10), notamment à plus de trois fois l'épaisseur de paroi (s) du tube de mesure (10) ; et/ou

- pour lequel la largeur (e) du prolongement est inférieure à 60 % de la largeur totale (B) de l'élément de fixation ; et/ou

- pour lequel la largeur (e) du prolongement est supérieure à sa hauteur (h) ; et/ou

- pour lequel le prolongement est disposé, notamment de façon centrée, sur un côté définissant la largeur totale (B) de l'élément de fixation ; et/ou

- pour lequel un côté définissant une hauteur (H) de l'élément de fixation, qui est pour l'essentiel perpendiculaire à un côté définissant la largeur totale (B) de l'élément de fixation, est supérieur à la largeur totale (B) de l'élément de fixation ;

et/ou

- pour lequel la largeur totale (B) de l'élément de fixation est supérieure à 6 fois l'épaisseur de paroi (s) du tube de mesure ; et/ou

- pour lequel la largeur totale (B) de l'élément de fixation est supérieure au plus grand diamètre extérieur (D) du tube de mesure.

3. Transducteur selon l'une des revendications précédentes,

- pour lequel l'élément de fixation est soumis à des déformations permanentes, notamment élastiques ou plastiques-élastiques mixtes, notamment à la suite d'un rétrécissement thermique et/ou d'une pression de l'extérieur et/ou d'une pression hydraulique de l'intérieur du tube de mesure et/ou d'un laminage de l'intérieur du tube de mesure ; et/ou

- pour lequel l'élément de fixation est précontraint en permanence, notamment radialement, par rapport au tube de mesure ; et/ou

- pour lequel l'élément de fixation est relié au tube de mesure au moins en certains points, notamment par tronçons ou sur l'ensemble de la circonférence, par une liaison par friction et/ou par une liaison de forme ; et/ou

- pour lequel l'élément de fixation est relié au tube de mesure au moins en certains points, notamment par tronçons ou sur l'ensemble de la circonférence, par une liaison de matière ; et/ou

- pour lequel l'élément de fixation est relié au tube de mesure au moins en certains points, notamment par tronçons ou sur l'ensemble de la circonférence, par brasage, notamment un brasage dur ; et/ou

- pour lequel l'élément de fixation est relié au tube de mesure au moins en certains points, notamment par tronçons ou sur l'ensemble de la circonférence, par soudage ; et/ou

- pour lequel l'élément de fixation est relié au tube de mesure au moins en certains points, notamment par tronçons ou sur l'ensemble de la circonférence, par collage ; et/ou

- pour lequel l'élément de fixation est dimensionné de telle sorte que les déformations élastiques temporaires du contour extérieur du tube de mesure, notamment à la suite de déformations temporaires radiales et/ou dépendantes de la pression du tube de mesure, qui provoquent des déformations au moins partiellement alignées radialement du tube de mesure, présentent un minimum dans la zone du prolongement.

4. Transducteur selon l'une des revendications précédentes, pour lequel le composant du capteur de vibrations est un aimant permanent.

**5.** Transducteur selon l'une des revendications 1 à 3, pour lequel le composant du capteur de vibrations est une bobine magnétique.

**6.** Transducteur selon la revendication précédente, pour lequel le transducteur comprend en outre un deuxième élément de fixation - pour l'essentiel identique ou de construction identique au premier élément de fixation - avec un contour extérieur pour l'essentiel rectangulaire et un prolongement faisant saillie de celui-ci, un aimant permanent du capteur de vibrations étant fixé au prolongement du deuxième élément de fixation.

**7.** Transducteur selon la revendication précédente, pour lequel la bobine magnétique du capteur de vibrations est fixée au prolongement du premier élément de fixation et l'aimant permanent du capteur de vibrations est fixé au prolongement du deuxième élément de fixation, de telle sorte qu'un axe longitudinal imaginaire de la bobine magnétique est aligné pour l'essentiel par rapport à un axe longitudinal imaginaire de l'aimant permanent.

**8.** Transducteur selon l'une des revendications précédentes, pour lequel l'au moins un tube de mesure est excité, pendant le fonctionnement, notamment au moyen d'un dispositif excitateur électrodynamique, au moins temporairement dans un mode utile, en ce qu'il exécute, notamment de manière prédominante ou exclusive, des vibrations de flexion autour d'un axe de vibration imaginaire, notamment avec une seule fréquence de résonance et/ou avec l'une de ses fréquences de résonance, lequel axe de vibration est parallèle à un axe longitudinal du transducteur reliant de manière imaginaire les extrémités de l'au moins un tube de mesure.

**9.** Transducteur selon la revendication précédente, pour lequel le premier élément de fixation est placé et aligné dans le transducteur de telle sorte

  - qu'un axe principal d'inertie correspondant à un moment d'inertie de masse minimal du premier élément de fixation

    -- est pour l'essentiel perpendiculaire à l'axe de vibration imaginaire, et/ou
    -- s'étend pour l'essentiel perpendiculairement à un plan de vibration imaginaire défini par les vibrations de flexion du tube de mesure, et/ou
    -- s'étend pour l'essentiel perpendiculairement aux mouvements de l'élément de fixation accompagnant les vibrations de flexion du tube de mesure, et/ou
    -- s'étend à une distance maximale de 50 % de la largeur (e) du prolongement (31)

d'un point central, notamment d'un centre de gravité de surface, d'une section transversale de tube imaginaire, entourée par l'élément de fixation, de l'au moins un tube de mesure, et/ou
    -- coïncide avec un diamètre du tube de mesure s'étendant à l'intérieur d'une section transversale de tube imaginaire de l'au moins un tube de mesure entouré par l'élément de fixation ; et/ou

  - qu'un axe principal d'inertie correspondant à un moment d'inertie de masse maximal du premier élément de fixation

    -- est pour l'essentiel parallèle à l'axe de vibration imaginaire, et/ou
    -- est pour l'essentiel parallèle à un plan de vibration imaginaire défini par les vibrations de flexion du tube de mesure, et/ou
    -- s'étend pour l'essentiel perpendiculairement aux mouvements de l'élément de fixation accompagnant les vibrations de flexion du tube de mesure ; et/ou
    -- s'étend à une distance, s'élevant au maximum à 50 % de la largeur (e) du prolongement (31), d'un point central, notamment d'un centre de gravité de surface, d'une section transversale de tube imaginaire, entourée par l'élément de fixation, de l'au moins un tube de mesure.

**10.** Transducteur selon l'une des revendications précédentes,

  - pour lequel l'élément de fixation est conçu pour être pour l'essentiel symétrique par rapport à un axe principal d'inertie correspondant à un moment d'inertie de masse minimal du premier élément de fixation, notamment également par rapport à un plan de coupe imaginaire de l'élément de fixation qui est défini de manière imaginaire par un axe principal d'inertie associé à un moment d'inertie de masse maximal de l'élément de fixation et l'axe principal d'inertie associé au moment d'inertie de masse minimal de l'élément de fixation ; et/ou
  - pour lequel le premier élément de fixation présente un moment d'inertie de surface axial (J) - qui est déterminé par un diamètre extérieur (D) du tube de mesure, la hauteur (H), la largeur totale (B) ainsi que la largeur (e) et la hauteur (h) du prolongement - notamment le plus grand et/ou se trouvant dans un plan de coupe imaginaire de l'au moins un tube de mesure, par rapport à l'un de ses axes de gravité imaginaires, qui correspond pour l'essentiel à la relation

$$J = \frac{BH^3}{12} - \frac{\pi}{64}D^4 + \frac{eh^3}{12} + \left(\frac{H+h}{2}\right)^2 \cdot eh$$

.

11. Transducteur selon l'une des revendications précédentes, pour lequel le premier élément de fixation présente un moment d'inertie de surface (J) axial maximal par rapport à l'un de ses axes de gravité imaginaires, qui est déterminé notamment par un diamètre extérieur (D) du tube de mesure, la hauteur (H), la largeur totale (B) ainsi que la largeur (e) et la hauteur (h) du prolongement et/ou se trouve dans un plan de coupe imaginaire de l'au moins un tube de mesure.

12. Transducteur selon la revendication précédente, pour lequel le premier élément de fixation est placé et aligné dans le transducteur de telle sorte que l'axe de gravité imaginaire, auquel se réfère le moment d'inertie de surface (J) axial maximal,

   - est pour l'essentiel parallèle à l'axe de vibration imaginaire, et/ou
   - est pour l'essentiel parallèle à un plan de vibration imaginaire défini par les vibrations de flexion du tube de mesure, et/ou
   - s'étend pour l'essentiel perpendiculairement aux mouvements de l'élément de fixation accompagnant les vibrations de flexion du tube de mesure ; et/ou
   - s'étend à une distance, s'élevant au maximum à 50 % de la largeur (e) du prolongement (31), d'un point central, notamment d'un centre de gravité de surface, d'une section transversale de tube imaginaire, entourée par l'élément de fixation, de l'au moins un tube de mesure ; et/ou
   - coïncide avec un diamètre du tube de mesure s'étendant à l'intérieur d'une section transversale de tube imaginaire, entourée par l'élément de fixation, de l'au moins un tube de mesure.

13. Transducteur selon l'une des revendications précédentes, pour lequel le transducteur comprend au moins deux tubes de mesure couplés mécaniquement l'un à l'autre et/ou de construction identique et/ou courbés et/ou parallèles l'un à l'autre, qui vibrent au moins par intermittence pendant le fonctionnement, notamment dans des directions opposées, lesquels tubes sont couplés au moyen d'un répartiteur côté entrée et d'un répartiteur côté sortie et/ou au moyen d'au moins un élément de couplage côté entrée et d'au moins un élément de couplage côté sortie.

14. Transducteur selon la revendication précédente, pour lequel l'au moins un capteur de vibrations, notamment électrodynamique, mesure de manière différentielle les vibrations des au moins deux tubes de mesure, notamment identiques et/ou en forme de U ou de V.

15. Utilisation d'un transducteur selon l'une des revendications précédentes, destiné à la mesure d'un débit massique et/ou d'une densité et/ou d'une viscosité et/ou d'une pression d'un produit s'écoulant dans une conduite de process.

14

200

100

13

Fig. 1

Fig. 2

Fig. 3

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- US 4738144 A
- US 4777833 A
- US 4823614 A
- US 5287754 A
- US 5291792 A
- US 5301557 A
- US 5398554 A
- US 5476013 A
- US 5531126 A
- US 5602345 A
- US 5610342 A
- US 5731527 A
- US 5691485 A
- US 5796010 A
- US 5796012 A
- US 5796011 A
- US 5945609 A
- US 5979246 A
- US 6047457 A
- US 6092429 A
- US 6168069 B
- US 6223605 B
- US 6311136 B
- US 6330832 B
- US 6397685 B
- US 6557422 B
- US 6519828 B
- US 6666098 B
- US 6378364 B
- US 6691583 B
- US 6840109 B
- US 6860158 B
- US 6883387 B
- US 6651513 B
- US 6758102 B
- US 6920798 B
- US 7080564 B
- US 7073396 B
- US 7077014 B
- US 7040179 B
- US 7017424 B
- US 7213469 B
- US 7299699 B
- US 7337676 A
- US 7340964 B
- US 7360451 B
- US 7392709 B
- US 20060201260 A
- US 20070186685 A
- US 20070151371 A
- US 20070151370 A
- US 20070119265 A
- US 20070119264 A
- US 20080141789 A
- US 20080047361 A
- JP 8136311 A
- JP 9015015 A
- WO 08059015 A
- WO 08013545 A
- WO 0102816 A
- WO 0014485 A
- WO 9940394 A
- US 7318356 B
- US 6868740 B
- US 5734112 A
- US 5731527557 A
- US 5576500 A
- US 5301 A
- US 4801897 A
- US 4879911 A
- US 5009109 A
- US 5736653 A
- US 4768384 A
- WO 00102816 A